# EUROPEAN PATENT APPLICATION

(11) **EP 4 765 983 A1**
(43) Date of publication of application: **24.06.2026**
(21) Application number: 24881062.4
(22) Date of filing: 20.06.2024
(51) Int. Cl.: H04W 72/1263

(54) **INFORMATION REPORTING METHOD, INFORMATION RECEIVING METHOD, COMMUNICATION NODE, AND STORAGE MEDIUM**

(30) Priority: 23.10.2023 CN 202311382275
(71) Applicant: ZTE CORPORATION, Shenzhen, Guangdong 518057 (CN)
(72) Inventor: SHA, Xiubin, Shenzhen, Guangdong 518057 (CN); GAO, Yuan, Shenzhen, Guangdong 518057 (CN); HUANG, He, Shenzhen, Guangdong 518057 (CN); DAI, Bo, Shenzhen, Guangdong 518057 (CN); VUTUKURI, Eswar Kalyan, Shenzhen, Guangdong 518057 (CN)
(74) Representative: Aipex B.V.
(86) International application number: PCT/CN2024/100434
(87) International publication number: WO 2025/086685

(57) **Abstract**

Provided are an information reporting method, an information receiving method, a communication node, and a storage medium. The information reporting method includes receiving a discard timer of a packet data unit (PDU) or a PDU set; and reporting buffer delay time information of the PDU or the PDU set via a medium access control-control element (MAC-CE) according to the discard timer.

## Description

### CROSS-REFERENCES TO RELATED APPLICATIONS

This application claims priority to Chinese Patent Application No. 202311382275.1, titled "INFORMATION REPORTING METHOD, INFORMATION RECEIVING METHOD, COMMUNICATION NODE, AND STORAGE MEDIUM", filed with the China National Intellectual Property Administration (CNIPA) on Oct. 23, 2023, the disclosure of which is incorporated herein by reference in its entirety.

### TECHNICAL FIELD

The present application relates to the field of wireless communication technologies, for example, an information reporting method, an information receiving method, a communication node, and a storage medium.

### BACKGROUND

Extended reality (XR) is a delay-sensitive service and is an important application scenario for new-generation wireless communication systems. Delay information of data, as a key performance requirement metric for XR services, has a significant impact on service reliability and efficiency; however, there is currently no effective mechanism for reporting such delay information.

### SUMMARY

The present application provides an information reporting method, an information receiving method, a communication node, and a storage medium.

The information reporting method of any embodiment of the present application is applied to a first communication node and includes receiving a discard timer of a packet data unit (PDU) or a PDU set; and reporting buffer delay time information of the PDU or the PDU set via a medium access control-control element (MAC-CE) according to the discard timer.

The information receiving method of any embodiment of the present application is applied to a second communication node and includes receiving delay time information reported for a video streaming service via a MAC-CE; and processing the video streaming service according to the delay time information.

Embodiments of the present application also provide a communication node. The communication node includes a memory, a processor, and a computer program stored in the memory and executable on the processor. When executing the program, the processor performs the information reporting method or the information receiving method.

Embodiments of the present application also provide a computer-readable storage medium storing a computer program which, when executed by a processor, causes the processor to perform the information reporting method or the information receiving method.

### BRIEF DESCRIPTION OF DRAWINGS

FIG. 1 is a flowchart of an information reporting method according to an embodiment.
FIG. 2 is a diagram of a MAC-CE for reporting buffer delay time information and/or buffer size information of only one logical channel group according to an embodiment.
FIG. 3 is a diagram of a MAC-CE for reporting buffer delay time information and/or buffer size information of only one logical channel group according to an embodiment.
FIG. 4 is a diagram of a MAC-CE for reporting buffer delay time information and/or buffer size information of multiple logical channel groups according to an embodiment.
FIG. 5 is a diagram of a MAC-CE for reporting buffer delay time information and/or buffer size information of multiple logical channel groups according to an embodiment.
FIG. 6 is a flowchart of determining a discard timer of a PDU or a PDU set according to a network state and a PSI threshold according to an embodiment.
FIG. 7 is a diagram illustrating the structure of an application-layer data unit according to an embodiment.
FIG. 8 is an example diagram illustrating decoding timing and display timing of different data frames of an application-layer data unit according to an embodiment.
FIG. 9 is a flowchart illustrating that a core network transmits an application-layer information indication to a base station according to an embodiment.
FIG. 10 is a flowchart illustrating that a terminal transmits an application-layer information indication to a base station according to an embodiment.
FIG. 11 is a diagram illustrating configuration of multiple PUSCH resources in each configured grant period according to an embodiment.
FIG. 12 is a diagram illustrating that subsequent PUSCH resources in a period are no longer used according to an embodiment.
FIG. 13 is a flowchart of an information receiving method according to an embodiment.
FIG. 14 is a diagram illustrating the structure of an information reporting apparatus according to an embodiment.
FIG. 15 is a diagram illustrating the structure of an information receiving apparatus according to an embodiment.
FIG. 16 is a diagram illustrating a hardware structure of a communication node according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

Currently, the 3GPP standards support a user equipment (UE) reporting delay time information of XR services via a medium access control-control element (MAC-CE) but do not specify a MAC-CE format. According to the 3GPP standards, multiple configured grant (CG) resources are configured for a UE in a CG period, and the UE can indicate which CG resources are no longer used. However, the standards do not specify how the UE determines which CG resources are no longer used. According to the 3GPP standards, to address the problem that application-layer data frames have relatively large data sizes, the concept of packet data unit (PDU) set is introduced when such data frames are transmitted over a wireless network. When transmitted to the wireless network, a data frame is segmented into multiple PDUs. PDUs corresponding to the same data frame are referred to as a PDU set. An application layer at a receiving end is generally required to receive all PDUs or most of the PDUs (with forward error correction (FEC)) in a PDU set to correctly decode the data frame. The 3GPP standards support configuring a special discard timer (of a PDU or a PDU set) under network congestion to trigger the UE to rapidly discard the PDU set to reduce the network load but do not specify which PDU sets with different PDU set importance (PSI) the special discard timer is applied to.

The information reporting method and the information receiving method of the present application provide a MAC-CE format for delay time reporting, a method for setting a discard timer according to a PSI under network congestion, and a determination strategy for an unused PUSCH occasion (i.e., occasions on which an uplink physical shared channel is not used).

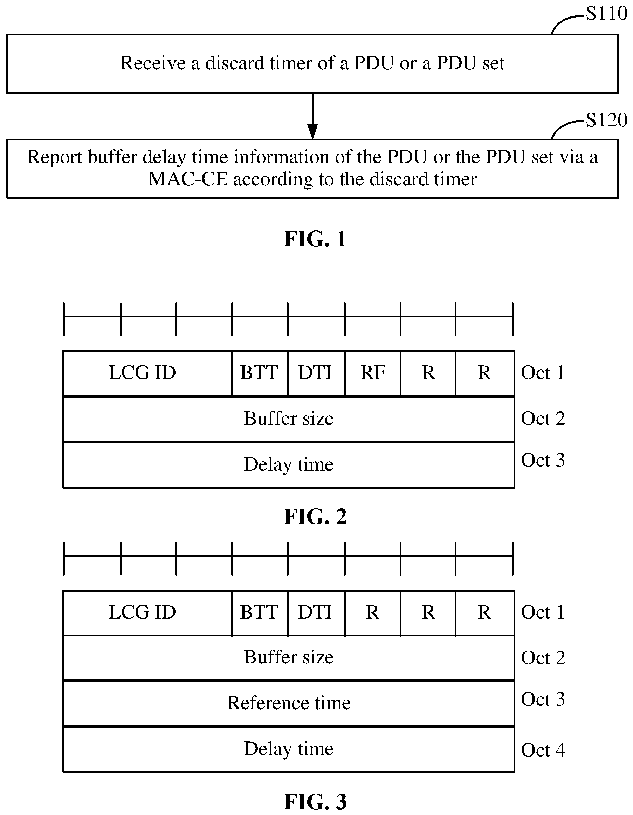

FIG. 1 is a flowchart of an information reporting method according to an embodiment. The method is applicable to a first communication node. As shown in FIG. 1, the method of this embodiment includes step 110 and step 120.

In step 110, a discard timer of a packet data unit (PDU) or a PDU set is received.

In step 120, buffer delay time information of the PDU or the PDU set is reported via a medium access control-control element (MAC-CE) according to the discard timer.

By receiving a discard timer of a PDU or a PDU set; and reporting buffer delay time information of the PDU or the PDU set via a MAC-CE according to the discard timer, the method of this embodiment provides a MAC-CE format for delay time reporting and improves the reliability of XR services. In some embodiments, also provided are a method for setting a discard timer according to a PSI under network congestion and a determination strategy for an unused PUSCH occasion.

In an embodiment, the MAC-CE includes at least one of the following: an identifier field for indicating the identifier of a logical channel group; a type field for indicating a table type corresponding to a buffer size; an indication field for indicating whether a buffer delay field is present; a reference field for indicating a reference time at which the MAC-CE is generated or transmitted for the first time at the first communication node; a reference time field for indicating a reference time corresponding to timeout of the discard timer corresponding to data; a buffer delay field for indicating the remaining time of data corresponding to the identifier of a logical channel group at a timeout time point relative to a reference time point; or a buffer size field for indicating a buffer size corresponding to the identifier of a logical channel group.

FIG. 2 is a diagram of a MAC-CE for reporting buffer delay time information and/or buffer size information of only one logical channel group according to an embodiment. FIG. 3 is a diagram of a MAC-CE for reporting buffer delay time information and/or buffer size information of only one logical channel group according to an embodiment. As shown in FIG. 2 and FIG. 3, the identifier field is the logical channel group ID (LCG-ID). The identifier field indicates the identifier of a logical channel group. The type field is the buffer size table type (BTT) in FIG. 2 and FIG. 3. The type field indicates the table type corresponding to the buffer size. The buffer size corresponds to two or more tables. The type field indicates which table is used. The indication field is the delay time indication (DTI) in FIG. 2 and FIG. 3. The indication field indicates whether a buffer delay field is present. If the indication field indicates that no buffer delay field is present (for example, the DTI field is set to 0), the MAC-CE no longer includes the third byte (Oct 3) of the buffer delay time information. If the indication field indicates that the buffer delay field is present (for example, the DTI field is set to 1), the MAC-CE includes the third byte (Oct 3) of the buffer delay time information. The field R in FIG. 2 and FIG. 3 is a reserved bit. The field R is set to 0 by default. The field R is not used currently. The field R may be used for future extension of the MAC-CE. The buffer size is the buffer size corresponding to the LCG ID. The RF or Reference Time field indicates the reference time at which the MAC-CE is generated or transmitted for the first time at the UE or indicates the reference time corresponding to timeout of the discard timer corresponding to data. When the RF field indicates the reference time at which the MAC-CE is generated or transmitted for the first time at the UE, the buffer delay time is a duration from the time at which the MAC-CE is generated or transmitted for the first time at the UE to the timeout time point of the discard timer corresponding to the data. The buffer delay field is the delay time in FIG. 2 and FIG. 3. The buffer delay field indicates the remaining time of data corresponding to the LCG ID of the UE at the timeout time point of the discard timer relative to the reference time. The buffer size field is the buffer size in FIG. 2 and FIG. 3. The buffer size field indicates the buffer size of data corresponding to the LCG ID of the UE. When no delay time field is present, the buffer size indicates the total buffer size of data corresponding to the LCG ID of the UE. When the delay time field is present, the buffer size indicates the buffer size of data whose remaining time before the timeout time point of the discard timer is less than or equal to the buffer delay time.

In an embodiment, the MAC-CE includes at least one of the following: an identifier field for indicating whether information of the i-th logical channel group is reported; a type field for indicating a table type corresponding to the buffer size of the i-th logical channel group; an indication field for indicating whether a buffer delay time of the i-th logical channel group is present; a first reference time field for indicating a reference time corresponding to a buffer delay time of the i-th logical channel group; a second reference time field for indicating a reference time shared by buffer delay time of all logical channel groups; a buffer delay field for indicating the remaining time of data corresponding to the identifier of the i-th logical channel group at a timeout time point relative to a reference time point; or a buffer size field for indicating a buffer size corresponding to the identifier of the i-th logical channel group. 1 ≤ i ≤ N, and N is the number of logical channel groups.

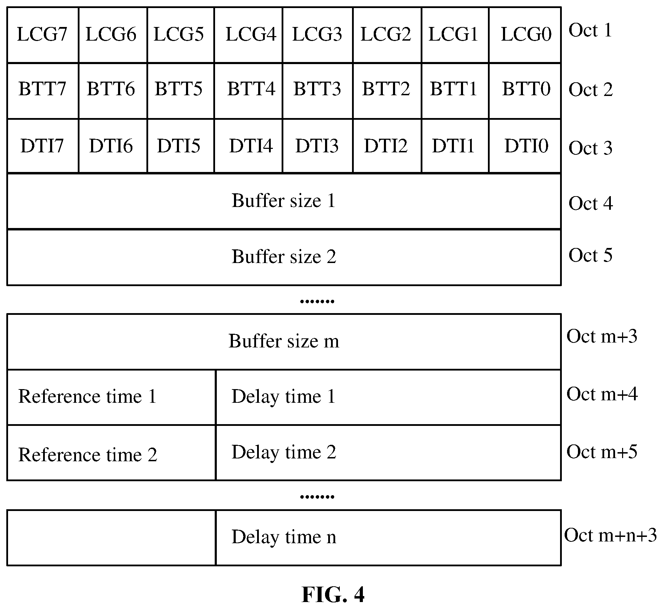

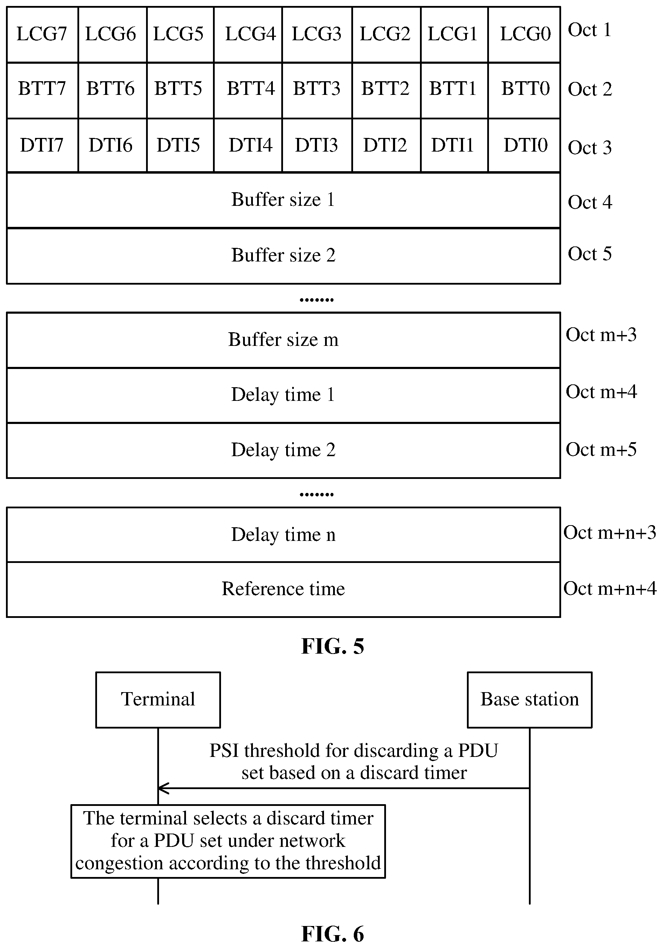

FIG. 4 is a diagram of a MAC-CE for reporting buffer delay time information and/or buffer size information of multiple logical channel groups according to an embodiment. FIG. 5 is a diagram of a MAC-CE for reporting buffer delay time information and/or buffer size information of multiple logical channel groups according to an embodiment. As shown in FIG. 4 and FIG. 5, the identifier field is LCGi. The identifier field indicates whether information of the i-th logical channel group is reported. For example, when LCGi is set to 0, it is indicated that information of the i-th logical channel group is not reported; and when LCGi is set to 1, it is indicated that information of the i-th logical channel group is not reported. The type field is BTTi in FIG. 4 and FIG. 5. The type field indicates the BTT of the i-th logical channel group, that is, the table type corresponding to the buffer size. For example, when BTTi is set to 0, it is indicated that the buffer size of the i-th logical channel group uses the first buffer size table; and when BTTi is set to 1, it is indicated that the buffer size of the i-th logical channel group uses the second buffer size table. Only when LCGi is set to reporting (for example, set to 1), the corresponding BTTi is valid; otherwise, the corresponding BTTi is invalid. The indication field is DTIi in FIG. 4 and FIG. 5. The indication field indicates whether the delay time field of the i-th logical channel group is present. If the indication field indicates that the i-th delay time is not present (for example, the DTIi field is set to 0), the MAC-CE no longer includes the buffer delay time (delay time i) information of the i-th logical channel group. If the indication field indicates that the i-th delay time is present (for example, the DTIi field is set to 1), the MAC-CE includes the buffer delay time (delay time i) information of the i-th logical channel group. The first reference time field is reference time i in FIG. 4 and FIG. 5. The first reference time field indicates the reference time corresponding to timeout of the discard timer corresponding to the data. The reference time may be an SFN boundary. If reference time i occupies 1 bit, the values are SFNO and SFN512; if reference time i occupies 2 bits, the values are SFN0, SFN256, SFN512, and SFN768; and so on. If reference time i occupies m bits, the step size is 1024/(2^n) radio frames. The second reference time field is reference time in FIG. 4 and FIG. 5. The second reference time field indicates the reference time corresponding to timeout of the discard timer corresponding to the data. The reference time may be an SFN boundary. If reference time i occupies 1 bit, the values are SFNO and SFN512; if reference time i occupies 2 bits, the values are SFN0, SFN256, SFN512, and SFN768; and so on. If reference time i occupies m bits, the step size is 1024/(2^n) radio frames. The buffer delay field is delay time i in FIG. 4 and FIG. 5. The buffer delay field indicates the remaining time (remaining time i) of data corresponding to LCG ID i of the UE at the timeout time point of the discard timer relative to the reference time. The buffer size field is buffer size i in FIG. 4 and FIG. 5. The buffer size field indicates the buffer size of data corresponding to LCG ID i of the UE. When no delay time i field is present, buffer size i indicates the total buffer size of data corresponding to LCG ID i of the UE. When the delay time i field is present, buffer size i indicates the buffer size of data whose remaining time before the timeout time point of discard timer i is less than or equal to buffer delay time i. This is related to whether it is required to ensure the integrity of PDU set transmission. 1 ≤ i ≤ N, and N is the number of logical channel groups.

In an embodiment, the reference time corresponding to the buffer delay time is from the time at which the MAC-CE is generated or transmitted for the first time at a terminal, and the reference time includes at least one of a hyper system frame number (H-SFN), a system frame number (SFN), a subframe, or a slot; or the reference time corresponding to the buffer delay time is an SFN boundary corresponding to the reference time corresponding to timeout of the discard timer corresponding to the data.

In this embodiment, the reference time corresponding to the buffer delay time is from the time at which the MAC-CE is generated or transmitted for the first time at the terminal, and the reference time includes at least one of a hyper system frame number (H-SFN), a system frame number (SFN), a subframe, or a slot; or at least one of an H-SFN, an SFN, a subframe, or a slot corresponding to timeout of the discard timer corresponding to the data. Considering that the transmission delay of the MAC-CE is not large, the H-SFN and/or the SFN may be represented by a tail bit of the MAC-CE. Alternatively, the reference time corresponding to the buffer delay time is an SFN boundary corresponding to the reference time corresponding to timeout of the discard timer corresponding to the data, for example, the boundary of SFNO or SFN512. (For example, 0 in the RF field indicates that the reference time is the boundary of SFN0, and 1 in the RF field indicates that the reference time is the boundary of SFN512.) In this case, the delay time indicates the duration required from the boundary of SFNO or SFN512 to the timeout of the discard timer corresponding to the data or indicates the duration required from the timeout of the discard timer corresponding to the data to the boundary of SFNO or SFN512.

In an embodiment, in response to the reference time corresponding to the buffer delay time being from the time at which the MAC-CE is generated or transmitted for the first time at the terminal, the buffer delay time is a duration from the time at which the MAC-CE is generated or transmitted for the first time at a UE to a timeout time point of the discard timer corresponding to the data; or in response to the reference time corresponding to the buffer delay time being the reference time corresponding to timeout of the discard timer corresponding to the data, the buffer delay time is a duration from the SFN boundary to the timeout time point corresponding to the data or is a duration from the timeout time point corresponding to the data to the SFN boundary.

In an embodiment, in response to the buffer delay field being absent, the buffer size field is for indicating the buffer size corresponding to the identifier of the logical channel group; or in response to the buffer delay field being present, the buffer size field is for indicating the buffer size of data whose remaining time before the timeout time point is less than or equal to the buffer delay time.

In an embodiment, in response to ensuring integrity of transmission of the PDU set, the timeout time point is a timeout time point of the PDU set, the buffer delay time indicates the remaining time of the PDU set before the timeout time point, and the buffer size is a buffer size of PDU sets whose remaining time before the timeout time point is less than or equal to the buffer delay time; in response to not requiring ensuring integrity of transmission of the PDU set, the timeout time point is a timeout time point of the PDU, the buffer delay time indicates the remaining time of the PDU before the timeout time point, and the buffer size is the buffer size of PDUs whose remaining time before the timeout time point is less than or equal to the buffer delay time; or in response to ensuring a preset PDU transmission success ratio in the PDU set, the timeout time point is a timeout time point of the PDU, the buffer delay time indicates the remaining time of the PDU before the timeout time point, and the buffer size is the buffer size of PDUs, within the PDU set and ensured to be successfully transmitted, whose remaining time before the timeout time point is less than or equal to the buffer delay time.

In this embodiment, for example, if it is required to ensure correct transmission of 80% of the PDUs in the PDU set, 30% of the PDUs have already been transmitted, and the remaining 70% of the PDUs satisfy the delay time reporting condition, then the buffer size of only 50% of the PDUs is reported.

In an embodiment, BTT indicates which one of the following two tables is used.

**Table 1 8-bit buffer level in the existing NR standard**

| Index | BS Value | Index | BS Value | Index | BS Value | Index | BS Value |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤ 11 | 66 | ≤ 635 | 130 | ≤ 35543 | 194 | ≤ 1989774 |
| 3 | ≤ 12 | 67 | ≤ 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | < 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| 13 | ≤ 23 | 77 | ≤ 1269 | 141 | ≤ 70990 | 205 | ≤ 3974215 |
| 14 | ≤ 25 | 78 | ≤ 1351 | 142 | ≤ 75598 | 206 | ≤ 4232186 |
| 15 | ≤ 26 | 79 | ≤ 1439 | 143 | ≤ 80505 | 207 | ≤ 4506902 |
| 16 | ≤ 28 | 80 | ≤ 1532 | 144 | ≤ 85730 | 208 | ≤ 4799451 |
| 17 | ≤ 30 | 81 | ≤ 1631 | 145 | ≤ 91295 | 209 | ≤ 5110989 |
| 18 | ≤ 32 | 82 | ≤ 1737 | 146 | ≤ 97221 | 210 | ≤ 5442750 |
| 19 | ≤ 34 | 83 | ≤ 1850 | 147 | ≤ 103532 | 211 | ≤ 5796046 |
| 20 | ≤ 36 | 84 | ≤ 1970 | 148 | ≤ 110252 | 212 | ≤ 6172275 |
| 21 | ≤ 38 | 85 | ≤ 2098 | 149 | ≤ 117409 | 213 | ≤ 6572925 |
| 22 | ≤ 40 | 86 | ≤ 2234 | 150 | ≤ 125030 | 214 | ≤ 6999582 |
| 23 | ≤ 43 | 87 | ≤ 2379 | 151 | ≤ 133146 | 215 | ≤ 7453933 |
| 24 | ≤ 46 | 88 | ≤ 2533 | 152 | ≤ 141789 | 216 | ≤ 7937777 |
| 25 | ≤ 49 | 89 | ≤ 2698 | 153 | ≤ 150992 | 217 | ≤ 8453028 |
| 26 | ≤ 52 | 90 | ≤ 2873 | 154 | ≤ 160793 | 218 | ≤ 9001725 |
| 27 | ≤ 55 | 91 | ≤ 3059 | 155 | ≤ 171231 | 219 | ≤ 9586039 |
| 28 | ≤ 59 | 92 | ≤ 3258 | 156 | ≤ 182345 | 220 | ≤ 10208280 |
| 29 | ≤ 62 | 93 | ≤ 3469 | 157 | ≤ 194182 | 221 | ≤ 10870913 |
| 30 | ≤ 66 | 94 | ≤ 3694 | 158 | ≤ 206786 | 222 | ≤ 11576557 |
| 31 | ≤ 71 | 95 | ≤ 3934 | 159 | ≤ 220209 | 223 | ≤ 12328006 |
| 32 | ≤ 75 | 96 | ≤ 4189 | 160 | ≤ 234503 | 224 | ≤ 13128233 |
| 33 | ≤ 80 | 97 | ≤ 4461 | 161 | ≤ 249725 | 225 | ≤ 13980403 |
| 34 | ≤ 85 | 98 | ≤ 4751 | 162 | ≤ 265935 | 226 | ≤ 14887889 |
| 35 | ≤ 91 | 99 | ≤ 5059 | 163 | ≤ 283197 | 227 | ≤ 15854280 |
| 36 | ≤ 97 | 100 | ≤ 5387 | 164 | ≤ 301579 | 228 | ≤ 16883401 |
| 37 | ≤ 103 | 101 | ≤ 5737 | 165 | ≤ 321155 | 229 | ≤ 17979324 |
| 38 | ≤ 110 | 102 | ≤ 6109 | 166 | ≤ 342002 | 230 | ≤ 19146385 |
| 39 | ≤ 117 | 103 | ≤ 6506 | 167 | ≤ 364202 | 231 | ≤ 20389201 |
| 40 | ≤ 124 | 104 | ≤ 6928 | 168 | ≤ 387842 | 232 | ≤ 21712690 |
| 41 | ≤ 132 | 105 | ≤ 7378 | 169 | ≤ 413018 | 233 | ≤ 23122088 |
| 42 | ≤ 141 | 106 | ≤ 7857 | 170 | ≤ 439827 | 234 | ≤ 24622972 |
| 43 | ≤ 150 | 107 | ≤ 8367 | 171 | ≤ 468377 | 235 | ≤ 26221280 |
| 44 | ≤ 160 | 108 | ≤ 8910 | 172 | ≤ 498780 | 236 | ≤ 27923336 |
| 45 | ≤ 170 | 109 | ≤ 9488 | 173 | ≤ 531156 | 237 | ≤ 29735875 |
| 46 | ≤ 181 | 110 | ≤ 10104 | 174 | ≤ 565634 | 238 | ≤ 31666069 |
| 47 | ≤ 193 | 111 | ≤ 10760 | 175 | ≤ 602350 | 239 | ≤ 33721553 |
| 48 | ≤ 205 | 112 | ≤ 11458 | 176 | ≤ 641449 | 240 | ≤ 35910462 |
| 49 | ≤ 218 | 113 | ≤ 12202 | 177 | ≤ 683087 | 241 | ≤ 38241455 |
| 50 | ≤ 233 | 114 | ≤ 12994 | 178 | ≤ 727427 | 242 | ≤ 40723756 |
| 51 | ≤ 248 | 115 | ≤ 13838 | 179 | ≤ 774645 | 243 | ≤ 43367187 |
| 52 | ≤ 264 | 116 | ≤ 14736 | 180 | ≤ 824928 | 244 | ≤ 46182206 |
| 53 | ≤ 281 | 117 | ≤ 15692 | 181 | ≤ 878475 | 245 | ≤ 49179951 |
| 54 | ≤ 299 | 118 | ≤ 16711 | 182 | ≤ 935498 | 246 | ≤ 52372284 |
| 55 | ≤ 318 | 119 | ≤ 17795 | 183 | ≤ 996222 | 247 | ≤ 55771835 |
| 56 | ≤ 339 | 120 | ≤ 18951 | 184 | ≤ 1060888 | 248 | ≤ 59392055 |
| 57 | ≤ 361 | 121 | ≤ 20181 | 185 | ≤ 1129752 | 249 | ≤ 63247269 |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | Reserved |

Table 2 New 8-bit buffer level generated based on 8-bit buffer level in the existing NR standard

**(Table 1)**

| Index | BS Value | Index | BS Value | Index | BS Value | Index | BS Value |
|---|---|---|---|---|---|---|---|
| 0 | ≤ 2586 | 64 | ≤ 19352 | 128 | ≤ 144792 | 192 | ≤ 1083363 |
| 1 | ≤ 2641 | 65 | ≤ 19762 | 129 | ≤ 147859 | 193 | ≤ 10106314 |
| 2 | ≤ 2755 | 66 | ≤ 20608 | 130 | ≤ 154190 | 194 | ≤ 1153685 |
| 3 | ≤ 2813 | 67 | ≤ 21045 | 131 | ≤ 157457 | 195 | ≤ 1178126 |
| 4 | ≤ 2933 | 68 | ≤ 21945 | 132 | ≤ 154199 | 196 | ≤ 1228572 |
| 5 | ≤ 2995 | 69 | ≤ 22410 | 133 | ≤ 167678 | 197 | ≤ 1254600 |
| 6 | ≤ 3123 | 70 | ≤ 23369 | 134 | ≤ 174858 | 198 | ≤ 1308320 |
| 7 | ≤ 3190 | 71 | ≤ 23865 | 135 | ≤ 178562 | 199 | ≤ 1336037 |
| 8 | ≤ 3326 | 72 | ≤ 24887 | 136 | ≤ 186208 | 200 | ≤ 1393245 |
| 9 | ≤ 3397 | 73 | ≤ 25414 | 137 | ≤ 190153 | 201 | ≤ 1422761 |
| 10 | ≤ 3542 | 74 | ≤ 26502 | 138 | ≤ 198295 | 202 | ≤ 1483682 |
| 11 | ≤ 3617 | 75 | ≤ 27064 | 139 | ≤ 202496 | 203 | ≤ 1515115 |
| 12 | ≤ 3772 | 76 | ≤ 28223 | 140 | ≤ 211166 | 204 | ≤ 1579990 |
| 13 | ≤ 3852 | 77 | ≤ 28820 | 141 | ≤ 215640 | 205 | ≤ 1613462 |
| 14 | ≤ 4017 | 78 | ≤ 30054 | 142 | ≤ 224874 | 206 | ≤ 1682549 |
| 15 | ≤ 4102 | 79 | ≤ 30691 | 143 | ≤ 229638 | 207 | ≤ 1718194 |
| 16 | ≤ 4277 | 80 | ≤ 32005 | 144 | ≤ 239471 | 208 | ≤ 1791766 |
| 17 | ≤ 4368 | 81 | ≤ 32683 | 145 | ≤ 244544 | 209 | ≤ 1829725 |
| 18 | ≤ 4555 | 82 | ≤ 34083 | 146 | ≤ 255015 | 210 | ≤ 1908072 |
| 19 | ≤ 4652 | 83 | ≤ 34805 | 147 | ≤ 260418 | 211 | ≤ 1948494 |
| 20 | ≤ 4851 | 84 | ≤ 36295 | 148 | ≤ 271568 | 212 | ≤ 2031927 |
| 21 | ≤ 4954 | 85 | ≤ 37064 | 149 | ≤ 277321 | 213 | ≤ 2074974 |
| 22 | ≤ 5166 | 86 | ≤ 38651 | 150 | ≤ 289196 | 214 | ≤ 2163822 |
| 23 | ≤ 5275 | 87 | ≤ 39470 | 151 | ≤ 295322 | 215 | ≤ 2209663 |
| 24 | ≤ 5501 | 88 | ≤ 41160 | 152 | ≤ 307968 | 216 | ≤ 2304278 |
| 25 | ≤ 5617 | 89 | ≤ 42032 | 153 | ≤ 314492 | 217 | ≤ 2353095 |
| 26 | ≤ 5858 | 90 | ≤ 43832 | 154 | ≤ 327958 | 218 | ≤ 2453852 |
| 27 | ≤ 5982 | 91 | ≤ 44760 | 155 | ≤ 334906 | 219 | ≤ 2505837 |
| 28 | ≤ 6238 | 92 | ≤ 46677 | 156 | ≤ 349247 | 220 | ≤ 2613135 |
| 29 | ≤ 6370 | 93 | ≤ 47666 | 157 | ≤ 356646 | 221 | ≤ 2668494 |
| 30 | ≤ 6643 | 94 | ≤ 49707 | 158 | ≤ 371917 | 222 | ≤ 2782757 |
| 31 | ≤ 6784 | 95 | ≤ 50760 | 159 | ≤ 379796 | 223 | ≤ 2841710 |
| 32 | ≤ 7074 | 96 | ≤ 52933 | 160 | ≤ 396058 | 224 | ≤ 2963389 |
| 33 | ≤ 7224 | 97 | ≤ 54055 | 161 | ≤ 404449 | 225 | ≤ 3026169 |
| 34 | ≤ 7534 | 98 | ≤ 56369 | 162 | ≤ 421767 | 226 | ≤ 3155746 |
| 35 | ≤ 7693 | 99 | ≤ 57564 | 163 | ≤ 430702 | 227 | ≤ 3222601 |
| 36 | ≤ 8023 | 100 | ≤ 60029 | 164 | ≤449144 | 228 | ≤ 3360590 |
| 37 | ≤ 8193 | 101 | ≤ 61300 | 165 | ≤ 458660 | 229 | ≤ 3431784 |
| 38 | ≤ 8544 | 102 | ≤ 63925 | 166 | ≤ 478299 | 230 | ≤ 3578730 |
| 39 | ≤ 8725 | 103 | ≤ 65279 | 167 | ≤ 488432 | 231 | ≤ 3654545 |
| 40 | ≤ 9098 | 104 | ≤ 68075 | 168 | ≤ 509346 | 232 | ≤ 3811030 |
| 41 | ≤ 9291 | 105 | ≤ 69517 | 169 | ≤ 520136 | 233 | ≤ 3891767 |
| 42 | ≤ 9689 | 106 | ≤ 72493 | 170 | ≤ 542408 | 234 | ≤ 4058409 |
| 43 | ≤ 9894 | 107 | ≤ 74029 | 171 | ≤ 553899 | 235 | ≤ 4144386 |
| 44 | ≤ 10318 | 108 | ≤ 77199 | 172 | ≤ 577617 | 236 | ≤ 4321845 |
| 45 | ≤ 10536 | 109 | ≤ 78834 | 173 | ≤ 589853 | 237 | ≤ 4413403 |
| 46 | ≤ 10987 | 110 | ≤ 82210 | 174 | ≤ 615110 | 238 | ≤ 4602381 |
| 47 | ≤ 11220 | 111 | ≤ 83951 | 175 | ≤ 628141 | 239 | ≤ 4699883 |
| 48 | ≤ 11700 | 112 | ≤ 87546 | 176 | ≤ 655038 | 240 | ≤ 4901127 |
| 49 | ≤ 11948 | 113 | ≤ 89400 | 177 | ≤ 668915 | 241 | ≤ 5004958 |
| 50 | ≤ 12460 | 114 | ≤ 93229 | 178 | ≤ 697558 | 242 | ≤ 5219265 |
| 51 | ≤ 12724 | 115 | ≤ 95204 | 179 | ≤ 712336 | 243 | ≤ 5329836 |
| 52 | ≤ 13269 | 116 | ≤ 99280 | 180 | ≤ 742837 | 244 | ≤ 5558055 |
| 53 | ≤ 13550 | 117 | ≤ 101384 | 181 | ≤ 758574 | 245 | ≤ 5675803 |
| 54 | ≤ 14131 | 118 | ≤ 105725 | 182 | ≤ 791055 | 246 | ≤ 5918835 |
| 55 | ≤ 14430 | 119 | ≤ 107964 | 183 | ≤ 807814 | 247 | ≤ 6044227 |
| 56 | ≤ 15048 | 120 | ≤ 112587 | 184 | ≤ 842404 | 248 | ≤ 6303035 |
| 57 | ≤ 15366 | 121 | ≤ | 185 | ≤ 860250 | 249 | ≤ 6436565 |
| | | | 114973 | | | | |
| 58 | ≤ 16024 | 122 | ≤ 119896 | 186 | ≤ 897085 | 250 | ≤ 6712173 |
| 59 | ≤ 16364 | 123 | ≤ 122436 | 187 | ≤ 916090 | 251 | ≤ 6854371 |
| 60 | ≤ 17064 | 124 | ≤ 127678 | 188 | ≤ 955316 | 252 | ≤ 7147868 |
| 61 | ≤ 17426 | 125 | ≤ 130383 | 189 | ≤ 975554 | 253 | ≤ 7299296 |
| 62 | ≤ 18172 | 126 | ≤ 135966 | 190 | ≤ 1017327 | 254 | ≤ 7611845 |
| 63 | ≤ 18557 | 127 | ≤ 138847 | 191 | ≤ 1038879 | 255 | ≤ 7773103 |

Table 2 is a finer-granularity 8-bit buffer level table generated based on the 8-bit buffer level table (Table 1) in the existing NR standard. A method for generating Table 2 is as follows: Several buffer reporting intervals that require finer granularity are selected from Table 1, and within each interval, N values are inserted linearly or exponentially so that the reporting value granularity of each interval becomes finer. For example, if two values are linearly inserted into the interval [a, b] to refine the granularity of the interval [a, b], the interval after the insertion becomes [a, floor[a+(b-a)/3], floor[a+(b-a)*2/3], b]; and if two values are exponentially inserted into the interval [a, b] to refine the granularity of the interval [a, b], the interval after the insertion becomes [a, floor[a*(b/a}^^{(1/3)}], floor[a*(b/a)^^{(2/3)}], b].

For example, Table 2 is formed by exponentially inserting two values into each of the 128 intervals corresponding to BS index = 89, ..., 216 of Table 1.

When the UE supports the use of the new buffer level table (Table 2) and the network allows the UE to use the new buffer level table (Table 2), the UE always chooses to report an index corresponding to a BS value and a table to which the BS value belongs, where the BS value is selected from the existing buffer level table (Table 1) and/or the new buffer level table (Table 2) such that the BS value is closest to and greater than or equal to a reported buffer size. That is, information contained in the BSR MAC-CE includes the index value corresponding to the BS value and the indication information of the table to which the BS value belongs, where the BS value is selected from the existing buffer level table (Table 1) and/or the new buffer level table (Table 2) and the BS value is closest to and greater than or equal to the reported buffer size.

In an embodiment, the method also includes determining the discard timer of the PDU or the PDU set according to a network state and a PDU set importance (PSI) threshold.

In this embodiment, application-layer data frames are compressed before being transmitted in a wireless network, and the compressed data frames have dependency or hierarchical relationships with each other. Due to such dependencies between the application-layer data frames, different application-layer data frames have different QoS priority levels or importance levels. Correspondingly, different PDU sets in a 3GPP network also have different priority levels or importance levels. Therefore, the concept of PSI is introduced in 3GPP. PDU sets with different PSI values may use different QoS mechanisms. For example, a base station configures at least two discard timers for different radio bearers. When the network load is normal, the UE uses a longer discard timer to maximize the transmission reliability of the PDU or the PDU set. When network congestion occurs, the UE uses a shorter discard timer to quickly reduce the network load.

In an embodiment, determining the discard timer of the PDU or the PDU set according to the network state and the PSI threshold includes in response to network congestion, applying a first PDU discard timer or a first PDU set discard timer to a PDU or a PDU set whose PSI is greater than or equal to the PSI threshold; and in response to network congestion, applying a second PDU discard timer or a second PDU set discard timer to a PDU or a PDU set whose PSI is less than the PSI threshold. A buffer delay time corresponding to the first PDU discard timer or the first PDU set discard timer is less than a buffer delay time corresponding to the second PDU discard timer or the second PDU set discard timer.

FIG. 6 is a flowchart of determining a discard timer of a PDU or a PDU set according to a network state and a PSI threshold according to an embodiment. As shown in FIG. 6, according to different importance levels of different PDU sets, the base station may further configure a PSI threshold and determine the discard timer of the used PDU or PDU set according to the network state and the PSI threshold. The PDU sets are divided into at least two categories: PDU sets with PSI greater than or equal to the PSI threshold (unimportant PDU sets) and PDU sets with PSI less than the PSI threshold. In response to network congestion, a first PDU discard timer or a first PDU set discard timer is applied to a PDU or a PDU set whose PSI is greater than or equal to the PSI threshold. The first PDU discard timer or the first PDU set discard timer corresponds to a shorter buffer delay time, thereby quickly reducing the network load. In response to network congestion, a second PDU discard timer or a second PDU set discard timer is applied to a PDU or a PDU set whose PSI is less than the PSI threshold. The second PDU discard timer or the second PDU set discard timer corresponds to a longer buffer delay time, thereby ensuring the transmission reliability of important PDU sets. Different PSI may use different discard timers to ensure the QoS of services.

In an embodiment, the PSI threshold is provided via radio resource control (RRC) dedicated signaling or via the MAC-CE.

In an embodiment, the method also includes reporting at least one of an application layer compression format or inter-application-layer-frame dependency via an application layer.

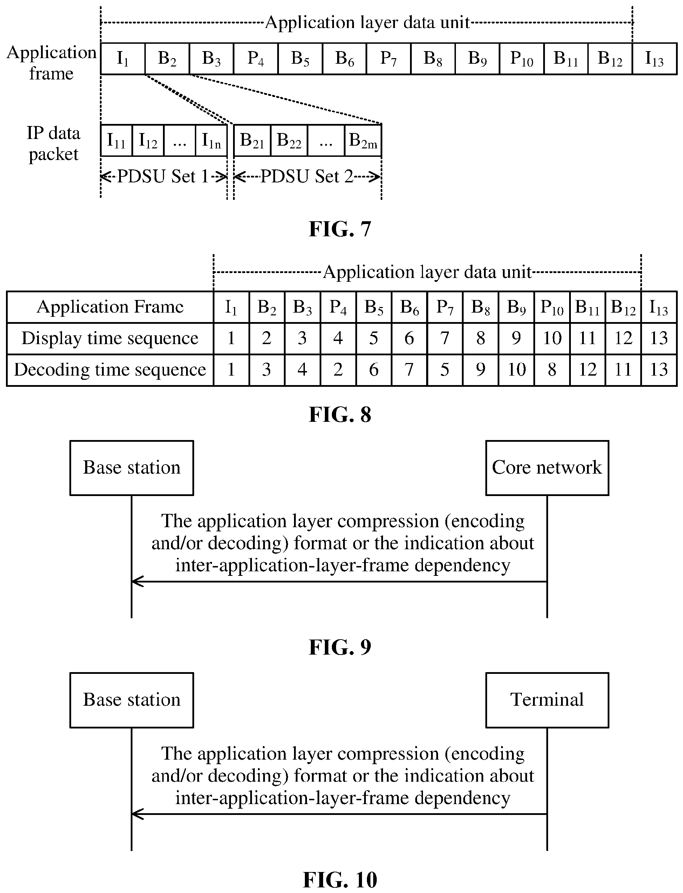

In this embodiment, different video compression (encoding) schemes result in different decoding schemes of application-layer data frames at the receiving end. Correspondingly, different PDU sets with different PSI may be associated with different protection strategies in the wireless network. For example, an H.264 video compression (encoding and/or decoding) scheme may be used. FIG. 7 is a diagram illustrating the structure of an application-layer data unit according to an embodiment. FIG. 8 is an example diagram illustrating decoding timing and display timing of different data frames of an application-layer data unit according to an embodiment. As shown in FIG. 7 and FIG. 8, frames in a group of I/B/P frames have inter-frame dependencies with each other. Once a frame in a frame group is discarded, subsequent frames may not be decodable. In this case, the receiving end may instruct the transmitting end to generate a new I frame to ensure reliability. Generation of more I frames may increase the network load. Therefore, discarding PDU sets at the wireless network under network congestion may fail to reduce the network load. For some video encoding schemes, dependencies between application-layer data frames are not strong. For example, video frames may be encoded in layers, where a base layer outlines a video and is relatively important, and an enhancement layer represents video details and resolution and is less important. Under network congestion, discarding data frames of the enhancement layer affects only the video resolution and does not affect the video smoothness. Therefore, the base station can determine whether to enable a PDU set discard strategy under network congestion simply after the application layer reports at least one of the following information to the base station: an application layer compression (encoding and/or decoding) format or inter-application-layer-frame dependency. FIG. 9 is a flowchart illustrating that a core network transmits an application-layer information indication to a base station according to an embodiment. FIG. 10 is a flowchart illustrating that a terminal transmits an application-layer information indication to a base station according to an embodiment. As shown in FIG. 9, the core network transmits the application layer compression (encoding and/or decoding) format or the indication about inter-application-layer-frame dependency to the base station. The base station determines a PDU set processing strategy according to the information, for example, whether to discard unimportant PDU sets and whether it is necessary to ensure in-order transmission of PDU sets. As shown in FIG. 10, the terminal transmits the application layer compression (encoding and/or decoding) format or the indication about inter-application-layer-frame dependency to the base station. The base station determines a PDU set processing strategy according to the information, for example, whether to discard unimportant PDU sets and whether it is necessary to ensure in-order transmission of PDU sets.

In an embodiment, in response to configuring multiple physical uplink shared channel (PUSCH) resources in a configured grant (CG) period, the configured resources are used by default until it is determined that no subsequent data transmission occurs in the CG period; and then an indication is sent to a second communication node to indicate that subsequent PUSCH resources in the period are no longer used.

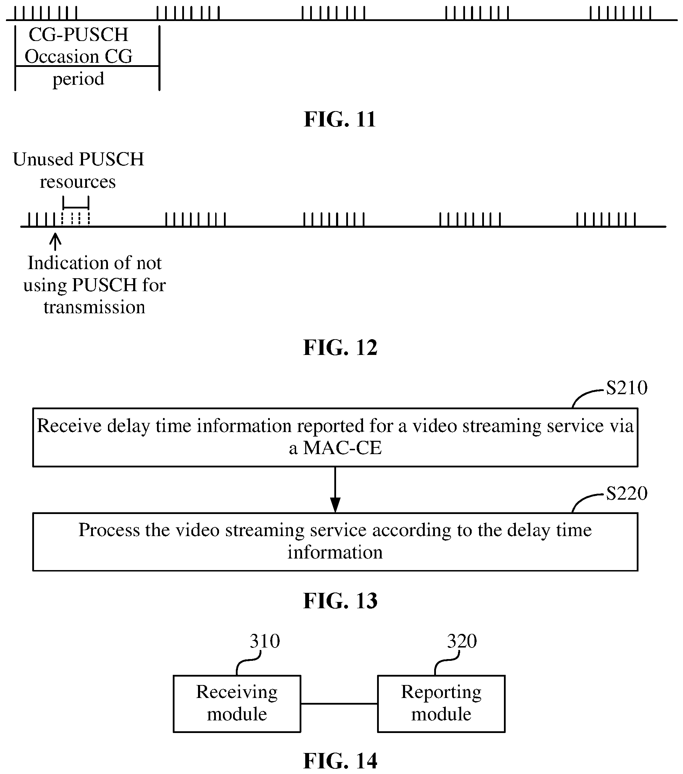

In this embodiment, according to the 3GPP standards, periodic CG resources may be configured for periodic uplink XR services. FIG. 11 is a diagram illustrating configuration of multiple PUSCH resources in each configured grant period according to an embodiment. As shown in FIG. 11, due to the uncertainty in the packet size of uplink XR service data, multiple PUSCH resources may be configured in each CG period. In response to configuring multiple PUSCH resources in a CG period, the configured resources are used by default. For example, if data transmission in a CG period is completed in advance, it is determined that there is no subsequent data transmission in the CG period. FIG. 12 is a diagram illustrating that subsequent PUSCH resources in a period are no longer used according to an embodiment. As shown in FIG. 12, when it is determined that there is no subsequent data transmission in the CG period, an indication is sent to the second communication node to indicate that subsequent PUSCH resources in the period are no longer used so that the base station can allocate related resources to other UEs.

In an embodiment, the method also includes determining that no subsequent data transmission occurs in the CG period in response to determining that at least one of the following conditions is satisfied: receiving an end PDU of the PDU set and/or a PDU indicated by a data burst end field and determining that no new data to be transmitted is present in a buffer after the current PUSCH transmission; or receiving a higher-layer indication indicating that no data transmission occurs.

FIG. 13 is a flowchart of an information receiving method according to an embodiment. The method is applicable to a second communication node. As shown in FIG. 13, the method of this embodiment includes step 210 and step 220.

In step 210, delay time information reported for a video streaming service via a MAC-CE is received.

In step 220, the video streaming service is processed according to the delay time information.

In this embodiment, an XR service is generally a video streaming service. Each video stream generally includes multiple image units (application-layer data units). Each image unit (application-layer data unit) includes multiple image frames (application-layer data frames). Delay time information reported for a video streaming service via a MAC-CE is received, and the video streaming service is processed according to the delay time information.

In an embodiment, the information receiving method also includes determining, according to at least one of an application layer compression format reported via an application layer or inter-application-layer-frame dependency reported via an application layer, whether to initiate a discard strategy of a PDU set in response to network congestion.

In an embodiment, the information receiving method also includes determining, according to an indication from a first communication node, PUSCH resources no longer used in a CG period.

Embodiments of the present application also provide an information reporting apparatus. FIG. 14 is a diagram illustrating the structure of an information reporting apparatus according to an embodiment. As shown in FIG. 14, the information reporting apparatus includes a receiving module 310 configured to receive a discard timer of a packet data unit (PDU) or a PDU set; and a reporting module 320 configured to report buffer delay time information of the PDU or the PDU set via a medium access control-control element (MAC-CE) according to the discard timer.

By receiving a discard timer of a packet data unit (PDU) or a PDU set; and reporting buffer delay time information of the PDU or the PDU set via a medium access control-control element (MAC-CE) according to the discard timer, the information reporting apparatus of this embodiment provides a MAC-CE format for delay time reporting, a method for setting a discard timer according to a PSI under network congestion, and a determination strategy for an unused PUSCH occasion.

In an embodiment, the MAC-CE includes at least one of the following: an identifier field for indicating the identifier of a logical channel group; a type field for indicating a table type corresponding to a buffer size; an indication field for indicating whether a buffer delay field is present; a reference field for indicating a reference time at which the MAC-CE is generated or transmitted for the first time at the first communication node; a reference time field for indicating a reference time corresponding to timeout of the discard timer corresponding to data; a buffer delay field for indicating the remaining time of data corresponding to the identifier of a logical channel group at a timeout time point relative to a reference time point; or a buffer size field for indicating a buffer size corresponding to the identifier of a logical channel group.

In an embodiment, the MAC-CE includes at least one of the following: an identifier field for indicating whether information of the i-th logical channel group is reported; a type field for indicating a table type corresponding to the buffer size of the i-th logical channel group; an indication field for indicating whether a buffer delay time of the i-th logical channel group is present; a first reference time field for indicating a reference time corresponding to a buffer delay time of the i-th logical channel group; a second reference time field for indicating a reference time shared by buffer delay time of all logical channel groups; a buffer delay field for indicating the remaining time of data corresponding to the identifier of the i-th logical channel group at a timeout time point relative to a reference time point; or a buffer size field for indicating a buffer size corresponding to the identifier of the i-th logical channel group. 1 ≤ i ≤ N, and N is the number of logical channel groups.

In an embodiment, the reference time corresponding to the buffer delay time is from the time at which the MAC-CE is generated or transmitted for the first time at a terminal, and the reference time includes at least one of a hyper system frame number (H-SFN), a system frame number (SFN), a subframe, or a slot; or the reference time corresponding to the buffer delay time is an SFN boundary corresponding to the reference time corresponding to timeout of the discard timer corresponding to the data.

In an embodiment, in response to the reference time corresponding to the buffer delay time being from the time at which the MAC-CE is generated or transmitted for the first time at the terminal, the buffer delay time is a duration from the time at which the MAC-CE is generated or transmitted for the first time at a UE to a timeout time point of the discard timer corresponding to the data; or in response to the reference time corresponding to the buffer delay time being the reference time corresponding to timeout of the discard timer corresponding to the data, the buffer delay time is a duration from the SFN boundary to the timeout time point corresponding to the data or is a duration from the timeout time point corresponding to the data to the SFN boundary.

In an embodiment, in response to the buffer delay field being absent, the buffer size field is for indicating the buffer size corresponding to the identifier of the logical channel group; or in response to the buffer delay field being present, the buffer size field is for indicating the buffer size of data whose remaining time before the timeout time point is less than or equal to the buffer delay time.

In an embodiment, in response to ensuring integrity of transmission of the PDU set, the timeout time point is a timeout time point of the PDU set, the buffer delay time indicates the remaining time of the PDU set before the timeout time point, and the buffer size is a buffer size of PDU sets whose remaining time before the timeout time point is less than or equal to the buffer delay time; in response to not requiring ensuring integrity of transmission of the PDU set, the timeout time point is a timeout time point of the PDU, the buffer delay time indicates the remaining time of the PDU before the timeout time point, and the buffer size is the buffer size of PDUs whose remaining time before the timeout time point is less than or equal to the buffer delay time; or in response to ensuring a preset PDU transmission success ratio in the PDU set, the timeout time point is a timeout time point of the PDU, the buffer delay time indicates the remaining time of the PDU before the timeout time point, and the buffer size is the buffer size of PDUs, within the PDU set and ensured to be successfully transmitted, whose remaining time before the timeout time point is less than or equal to the buffer delay time.

In an embodiment, the apparatus also includes determining the discard timer of the PDU or the PDU set according to a network state and a PDU set importance (PSI) threshold.

In an embodiment, determining the discard timer of the PDU or the PDU set according to the network state and the PSI threshold includes in response to network congestion, applying a first PDU discard timer or a first PDU set discard timer to a PDU or a PDU set whose PSI is greater than or equal to the PSI threshold; and in response to network congestion, applying a second PDU discard timer or a second PDU set discard timer to a PDU or a PDU set whose PSI is less than the PSI threshold. A buffer delay time corresponding to the first PDU discard timer or the first PDU set discard timer is less than a buffer delay time corresponding to the second PDU discard timer or the second PDU set discard timer.

In an embodiment, the PSI threshold is provided via radio resource control (RRC) dedicated signaling or via the MAC-CE.

In an embodiment, the information reporting apparatus also includes reporting at least one of an application layer compression format or inter-application-layer-frame dependency via an application layer.

In an embodiment, in response to configuring multiple physical uplink shared channel (PUSCH) resources in a configured grant (CG) period, the configured resources are used by default until it is determined that no subsequent data transmission occurs in the CG period; and then an indication is sent to a second communication node to indicate that subsequent PUSCH resources in the period are no longer used.

In an embodiment, the apparatus also includes determining that no subsequent data transmission occurs in the CG period in response to determining that at least one of the following conditions is satisfied: receiving an end PDU of the PDU set and/or a PDU indicated by a data burst end field and determining that no new data to be transmitted is present in a buffer after the current PUSCH transmission; or receiving a higher-layer indication indicating that no data transmission occurs.

The information reporting apparatus of this embodiment and the information reporting method of any previous embodiment belong to the same inventive concept. For technical details not described in detail in this embodiment, see any previous embodiment. This embodiment has the same beneficial effects as the information reporting method performed.

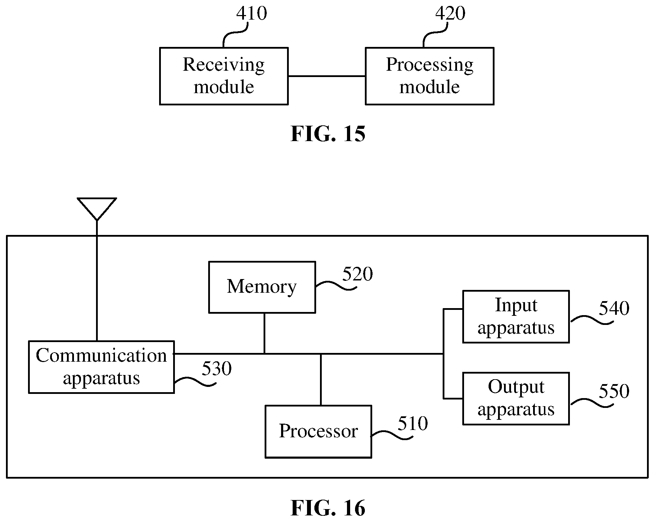

Embodiments of the present application also provide an information receiving apparatus. FIG. 15 is a diagram illustrating the structure of an information receiving apparatus according to an embodiment. As shown in FIG. 15, the information receiving apparatus includes a receiving module 410 configured to receive delay time information reported for a video streaming service via a MAC-CE; and a processing module 420 configured to process the video streaming service according to the delay time information.

The information receiving apparatus receives delay time information reported for a video streaming service via a MAC-CE; and processes the video streaming service according to the delay time information.

In an embodiment, the information receiving apparatus also includes a first determination module configured to determine, according to at least one of an application layer compression format reported via an application layer or inter-application-layer-frame dependency reported via an application layer, whether to initiate a discard strategy of a PDU set in response to network congestion.

In an embodiment, the information receiving apparatus also includes a second determination module configured to determine, according to an indication from a first communication node, PUSCH resources no longer used in a CG period.

The information receiving apparatus of this embodiment and the information receiving method of any previous embodiment belong to the same inventive concept. For technical details not described in detail in this embodiment, see any previous embodiment. This embodiment has the same beneficial effects as the information receiving method performed.

Embodiments of the present application also provide a communication node. FIG. 16 is a diagram illustrating a hardware structure of a communication node according to an embodiment. As shown in FIG. 16, the communication node of the present application includes a processor 510 and a memory 520. One or more processors 510 are configured in the communication node. FIG. 16 illustrates one processor 510 by way of example. The memory 520 is configured to store one or more programs. The one or more programs are executed by the one or more processors 510 to cause the one or more processors 510 to perform the information reporting method or the information receiving method of any embodiment of the present application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners, and the connection via a bus is shown as an example in FIG. 16.

The input apparatus 540 may be configured to receive inputted digital or character information and generate key signal input related to user settings and function control of the electronic device. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules (for example, the receiving module 310 and the reporting module 320 in the information reporting apparatus or the receiving module 410 and the processing module 420 in the information receiving apparatus) corresponding to the packet processing method of any embodiment of the present application. The memory 520 may include a program storage region and a data storage region, where the program storage region may store an operating system and an application program required by at least one function, and the data storage region may store data and the like created according to the use of the communication node. In addition, the memory 520 may include a high-speed random-access memory and may also include a nonvolatile memory such as at least one disk memory, a flash memory, or another nonvolatile solid-state memory. In some examples, the memory 520 may also include memories remote relative to the processor 510 and accessible to the communication node via a network. Examples of the network include, but are not limited to, the Internet, an intranet, a local area network, a mobile communication network, and a combination thereof.

Embodiments of the present application also provide a storage medium storing a computer program which, when executed by a processor, causes the processor to perform the information reporting method or the information receiving method of any embodiment of the present application.

The information reporting method is applied to a first communication node and includes receiving a discard timer of a packet data unit (PDU) or a PDU set; and reporting buffer delay time information of the PDU or the PDU set via a medium access control-control element (MAC-CE) according to the discard timer.

The information receiving method is applied to a second communication node and includes receiving delay time information reported for a video streaming service via a MAC-CE; and processing the video streaming service according to the delay time information.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples of the computer-readable storage medium (a non-exhaustive list) include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

Embodiments of the present application also provide a computer program product that includes a computer program stored on a non-transient computer-readable storage medium. The computer program includes program instructions which, when executed by a computer, cause the computer to execute the method in any one of the method embodiments described above.

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. An information reporting method, applied to a first communication node, comprising:
receiving a discard timer of a packet data unit (PDU) or a PDU set; and
reporting buffer delay time information of the PDU or the PDU set via a medium access control-control element (MAC-CE) according to the discard timer.

2. The method of claim 1, wherein the MAC-CE comprises at least one of the following:
an identifier field for indicating an identifier of a logical channel group;
a type field for indicating a table type corresponding to a buffer size;
an indication field for indicating whether a buffer delay field is present;
a reference field for indicating a reference time at which the MAC-CE is generated or transmitted for a first time at the first communication node;
a reference time field for indicating a reference time corresponding to timeout of the discard timer corresponding to data;
a buffer delay field for indicating remaining time of data corresponding to an identifier of a logical channel group at a timeout time point relative to a reference time point; or
a buffer size field for indicating a buffer size corresponding to an identifier of a logical channel group.

3. The method of claim 1, wherein the MAC-CE comprises at least one of the following:
an identifier field for indicating whether information of an i-th logical channel group is reported;
a type field for indicating a table type corresponding to a buffer size of an i-th logical channel group;
an indication field for indicating whether a buffer delay time of an i-th logical channel group is present;
a first reference time field for indicating a reference time corresponding to a buffer delay time of an i-th logical channel group;
a second reference time field for indicating a reference time shared by buffer delay time of all logical channel groups;
a buffer delay field for indicating remaining time of data corresponding to an identifier of an i-th logical channel group at a timeout time point relative to a reference time point; or
a buffer size field for indicating a buffer size corresponding to an identifier of an i-th logical channel group;
wherein 1 ≤ i ≤ N, and N is a number of logical channel groups.

4. The method of claim 2 or 3, wherein
the reference time corresponding to the buffer delay time is from a time at which the MAC-CE is generated or transmitted for a first time at a terminal, and the reference time comprises at least one of a hyper system frame number (H-SFN), a system frame number (SFN), a subframe, or a slot; or
the reference time corresponding to the buffer delay time is an SFN boundary corresponding to the reference time corresponding to timeout of the discard timer corresponding to the data.

5. The method of claim 4, wherein
in response to the reference time corresponding to the buffer delay time being from the time at which the MAC-CE is generated or transmitted for the first time at the terminal, the buffer delay time is a duration from a time at which the MAC-CE is generated or transmitted for a first time at a UE to a timeout time point of the discard timer corresponding to the data; or
in response to the reference time corresponding to the buffer delay time being the reference time corresponding to timeout of the discard timer corresponding to the data, the buffer delay time is a duration from the SFN boundary to the timeout time point corresponding to the data or is a duration from the timeout time point corresponding to the data to the SFN boundary.

6. The method of claim 2 or 3, wherein
in response to the buffer delay field being absent, the buffer size field is for indicating the buffer size corresponding to the identifier of the logical channel group; or
in response to the buffer delay field being present, the buffer size field is for indicating a buffer size of data whose remaining time before the timeout time point is less than or equal to the buffer delay time.

7. The method of claim 2 or 3, wherein
in response to ensuring integrity of transmission of the PDU set, the timeout time point is a timeout time point of the PDU set, the buffer delay time indicates remaining time of the PDU set before the timeout time point, and the buffer size is a buffer size of PDU sets whose remaining time before the timeout time point is less than or equal to the buffer delay time;
in response to not requiring ensuring integrity of transmission of the PDU set, the timeout time point is a timeout time point of the PDU, the buffer delay time indicates remaining time of the PDU before the timeout time point, and the buffer size is a buffer size of PDUs whose remaining time before the timeout time point is less than or equal to the buffer delay time; or
in response to ensuring a preset PDU transmission success ratio in the PDU set, the timeout time point is a timeout time point of the PDU, the buffer delay time indicates remaining time of the PDU before the timeout time point, and the buffer size is a buffer size of PDUs, within the PDU set and ensured to be successfully transmitted, whose remaining time before the timeout time point is less than or equal to the buffer delay time.

8. The method of claim 2, further comprising:
determining the discard timer of the PDU or the PDU set according to a network state and a PDU set importance (PSI) threshold.

9. The method of claim 8, wherein determining the discard timer of the PDU or the PDU set according to the network state and the PSI threshold comprises:
in response to network congestion, applying a first PDU discard timer or a first PDU set discard timer to a PDU or a PDU set whose PSI is greater than or equal to the PSI threshold; and
in response to network congestion, applying a second PDU discard timer or a second PDU set discard timer to a PDU or a PDU set whose PSI is less than the PSI threshold;
wherein a buffer delay time corresponding to the first PDU discard timer or the first PDU set discard timer is less than a buffer delay time corresponding to the second PDU discard timer or the second PDU set discard timer.

10. The method of claim 8, wherein the PSI threshold is provided via radio resource control (RRC) dedicated signaling or via the MAC-CE.

11. The method of claim 1, further comprising:
reporting at least one of an application layer compression format or inter-application-layer-frame dependency via an application layer.

12. The method of claim 11, wherein
in response to configuring a plurality of physical uplink shared channel (PUSCH) resources in a configured grant (CG) period, the configured resources are used by default until it is determined that no subsequent data transmission occurs in the CG period; and then an indication is sent to a second communication node to indicate that subsequent PUSCH resources in the period are no longer used.

13. The method of claim 12, further comprising:
determining that no subsequent data transmission occurs in the CG period in response to determining that at least one of the following conditions is satisfied:
receiving an end PDU of the PDU set and/or a PDU indicated by a data burst end field and determining that no new data to be transmitted is present in a buffer after a current PUSCH transmission; or
receiving a higher-layer indication indicating that no data transmission occurs.

14. An information receiving method, applied to a second communication node, comprising:
receiving delay time information reported for a video streaming service via a medium access control-control element (MAC-CE); and
processing the video streaming service according to the delay time information.

15. The method of claim 14, further comprising:
determining, according to at least one of an application layer compression format reported via an application layer or inter-application-layer-frame dependency reported via an application layer, whether to initiate a discard strategy of a packet data unit (PDU) set in response to network congestion.

16. The method of claim 14, further comprising:
determining, according to an indication from a first communication node, physical uplink shared channel (PUSCH) resources no longer used in a configured grant (CG) period.

17. A communication node, comprising a memory and one or more processors, wherein
the memory is configured to store one or more programs; and
when executed by the one or more processors, the one or more programs cause the one or more processors to perform the information reporting method of any one of claims 1 to 13 or the information receiving method of any one of claims 14 to 16.

18. A computer-readable storage medium storing a computer program which, when executed by a processor, causes the processor to perform the information reporting method of any one of claims 1 to 13 or the information receiving method of any one of claims 14 to 16.
